Europäisches Patentamt

European Patent Office

Office européen des brevets

(11) Publication number: **0 168 622**
A2

# (12) EUROPEAN PATENT APPLICATION

(21) Application number: **85107034.2**

(51) Int. Cl.⁴: **C 08 F 2/18**, C 08 J 9/28

(22) Date of filing: **07.06.85**

(30) Priority: **18.06.84 US 621344**

(43) Date of publication of application: **22.01.86**
**Bulletin 86/4**

(84) Designated Contracting States: **BE DE FR GB IT NL SE**

(71) Applicant: **THE DOW CHEMICAL COMPANY, 2030 Dow
Center Abbott Road P.O. Box 1967, Midland,
MI 48640 (US)**

(72) Inventor: **Gibbs, Marylu Benton, 3783 Ken's Lane,
Midland Michigan 48640 (US)**
Inventor: **Sypniewski, George Chester, Rt. 3, Box 222,
Marinette Wisconsin 54143 (US)**
Inventor: **Harris, William Ira, 2806 St. Mary's Drive,
Midland Michigan 48640 (US)**

(74) Representative: **Sternagel, Hans-Günther, Dr. et al,
Patentanwälte Dr. M. Hann Dr. H.-G. Sternagel
Marburger Strasse 38, D-6300 Giessen (DE)**

(54) **Ion exchange resins.**

(57) A process for preparing improved macroporous cross-linked copolymer particles capable of being converted into ion exchange resins involves forming free radical matrices in an aqueous suspension medium in the presence of an organic phase separating agent. A mixture of monomer(s), such as styrene and divinylbenzene, is fed into the mixture under polymerization conditions. The macroporous copolymer particles so prepared which when converted to resins exhibit improved physical properties.

# ION EXCHANGE RESINS

This invention relates to ion exchange resins and particularly to ion exchange resins in the form of spheroidal beads having high mechanical strengths.

Polymeric ion exchange resins in the form of spheroidal beads are used in many applications as chelating resins and as anion or cation exchangers. In many of these applications, the resins are subjected to stresses which cause substantial breakage in the beads. Said stresses can be mechanical (i.e., due to crushing or collisions between beads or the beads and their containers) or osmotic (i.e., such as when the beads are subjected to sudden or repeated changes in electrolyte concentration). The breakage of the ion exchange beads causes substantial increases in pressure drop in the ion exchange column and large costs in replacing the broken resins.

In view of the deficiencies of known ion exchange resins, it would be desirable to provide a macroporous type copolymer particle capable of being converted into an ion exchange resin, which particle has good osmotic and mechanical properties and which resin is capable of having a high ion exchange capacity.

The present invention in one aspect is a process for manufacturing improved crosslinked copolymer particles capable of being converted into ion exchange resins and having a macroreticular character, which process comprises:

(a) forming an agitated aqueous suspension of (i.) a suspending agent in an amount sufficient to provide suspension of the particles; (ii.) a functionally effective amount of a polymerization initiator; and (iii.) a phase-separating amount of an organic material in which the monomer(s) to be fed is soluble but in which the resulting copolymer particles are essentially insoluble, and which is capable of causing phase separation of the resulting copolymer particles from the organic material in order to provide a copolymer particle having a macroreticular character;

(b) feeding to said mixture under polymerization conditions monomer(s) while balancing the suspension conditions, the feed rate of monomer(s), the agitation rate and the polymerization rate in order to provide copolymer particles having a macroreticular character such that free radicals contained in the free-radical matrix catalyze the polymerization of said monomer feed, and

(c) continuing polymerization conditions until the monomer(s) which is present is essentially converted to polymer.

In the preferred embodiment of the present invention polymerizable monomer(s) is initially suspended in the suspension mixture in process step (a) and additional monomer(s) is fed to the suspension mixture under polymerizable conditions in process step (b).

In the most preferred embodiment of the present invention polymerizable monomer(s) is suspended in the suspension mixture in process step (a) and the so formed suspension mixture is subjected to polymerization conditions at least to the point at which phase separation of organic material and copolymer occurs but to the point at which substantially total polymerization of monomer(s) does not occur and additional monomer(s) is fed to the suspension mixture under polymerization conditions in process step (b).

When desired, the organic phase separation material is removed from copolymer particles using well-known methods such as distillation.

Also, when desired the copolymer particles are functionalized using conventional techniques well-known in the art.

The ion exchange resins prepared via the process of this invention exhibit improved resistance to attrition, increased crush strengths and/or resistance to osmotic shock as compared to conventional macroporous exchange resins. Because of the improved mechanical strength of the resins prepared according to the process of this invention, the resins can be employed under harsher conditions than previously known macroporous resins. "Crush strength", as that term is used herein, refers to the mechanical load required to break individual resin beads.

Detailed Description of the Invention

The monomers useful in the preparation of the copolymer particles are advantageously suspension polymerizable ethylenically unsaturated monomers. Such suspension polymerizable monomers are well known in the art and reference is made to Polymer Processes, edited by Calvin E. Schildknecht, published in 1956 by Interscience Publishers, Inc., New York, Chapter III, "Polymerization in Suspension" by E. Trommsdoff and C. E. Schildknecht, pp. 69-109 for purposes of illustration. In Table II on pp. 78-81 of Schildknecht are listed diverse kinds of monomers which can be employed in the practice of this invention. Suitable monoethylenically unsaturated monomers and poly ethylenically unsaturated monomers useful in the practice of this invention are also disclosed in U.S. Patent No. 4,419,245. Of such suspension polymerizable monomers, of particular interest herein are the water -insoluble monomers including the monovinylidene aromatic such as styrene, vinyl napthalene, alkyl substituted styrenes (particularly monoalkyl substituted styrenes such as vinyltoluene and ethyl vinylbenzene) and halo-substituted styrenes such as bromo- or chlorostyrene, the polyvinylidene aromatic such as divinylbenzene, divinyltoluene, divinyl xylene, divinyl naphthalene, trivinylbenzene, divinyl diphenyl ether, divinyl diphenyl sulfone and the like; esters of α,β-ethylenically unsaturated carboxylic acids, particularly acrylic or methacrylic acid, such as methyl methacrylate, ethyl acrylate, diverse alkylene diacrylates and alkylene dimethacrylates, and mixtures of one or more of said monomers. Of said monomers, the monovinylidene aromatics, particularly styrene or a mixture of styrene with a monoalkyl substituted styrene; the polyvinylidene aromatics, particularly divinylbenzene; esters of α,β-ethylenically unsaturated carboxylic acids, particularly methyl methacrylate or mixtures containing methylmethacrylate, particularly a mixture of styrene and divinylbenzene or styrene, divinylbenzene and methyl methacrylate are preferably employed herein.

Preferably, the polymerization initiator, useful herein, is a conventional chemical initiator useful as a free radical generator in the polymerization of ethylenically unsaturated monomers. Representative of such polymerization initiators are UV radiation and chemical initiators including azo compounds such as azobisisobutyronitrile; peroxygen compounds such as benzoyl peroxide, t-butyl peroctoate, t-butyl perbenzoate and isopropylpercarbonate; and the like. Several catalysts are disclosed in U.S. Patent Nos. 4,192,921; 4,246,386; and 4,283,499. The polymerization initiator is employed in an amount sufficient to cause the copolymerization of the monomeric components in the monomer mixture. Such amount will generally vary depending on a variety of factors including the type of initiator employed, and the type and proportion of monomers in the monomer mixture used herein. Generally, the initiator is employed in amounts from 0.02 to 1, preferably from 0.05 to 0.5, weight percent based on the total weight of the monomer mixture.

The monomers are advantageously suspended, using relatively high agitation rates, in a suitable suspending medium such as water or other aqueous liquid. Suspending agents useful herein are those materials which assist in maintaining a more uniform dispersion of the droplets in the aqueous liquid. Although the suspending agents most advantageously employed herein are dependent on the type and amount of monomers employed in preparing the droplets, in general, suspending agents conventionally employed hereto in the suspension polymerization of mono- and polyethylenically unsaturated monomers are advantageously employed. Representative of such suspending agents are gelatin, polyvinyl alcohol, sodium methacrylate, magnesium silicate, sodium cellulose glycolate, hydroxyethylcellulose, methylcelluloses, carboxymethylmethylcellulose, and the like. Suitable suspending agents are disclosed in U.S. Patent No. 4,419,245.

While the amount of the suspending medium (e.g., aqueous phase) advantageously employed herein, will vary depending on the type and amount of the suspending agent and the amount of monomer, in general, the suspending medium is employed in amounts from 30 to 70, preferably from 40 to 60, weight percent based on the weight of the monomer mixture.

The copolymer beads of this invention are advantageously prepared by forming a crosslinked, free radical-containing matrix (hereinafter "free radical matrix"), and contacting said free radical matrix with a monomer feed comprising at least one monomer under conditions such that free radicals catalyze the polymerization of said monomer to form copolymer beads. Said polymerization is carried out as a suspension polymerization wherein the polymeric matrix and the monomers to be polymerized are suspended in a suitable suspending medium which is generally an aqueous solution containing a suspension agent.

The prepared free radical matrix is suspended in an appropriate suspending medium. When free radical matrices are employed, preparation of said matrices and the subsequent addition and polymerization of the monomer feed are advantageously, and preferably, carried out in a single reaction vessel. In general, said suspending medium is a liquid in which both the free radical matrix and the monomers to be contacted therewith are insoluble. Said suspending medium is typically an aqueous solution containing from about 0.1 to about 1.5 weight percent of a suspension agent. In addition, the suspension can suitably contain polymerization inhibitors, dispersants, and other materials known to be advantageously employed in the suspension polymerization of ethylenically unsaturated monomers.

Phase separating organic materials, which are useful herein, are preferably solvents for the monomer, but an agent which does not dissolve the copolymer. The phase separating organic material is inert in that it does not react with the monomers (with which it is soluble), the copolymers (with which it is insoluble), or the suspending medium. Generally, organic materials having boiling points greater than about 60°C are employed. Suitable phase separating organic materials include aromatic hydrocarbons, aliphatic hydrocarbons and halogenated hydrocarbons. Examples include iso-octane, hexane, benzene, toluene, xylene, chlorobenzene, ethylene dichloride, ethylene dibromide, and the like as well as those "non-solvents" disclosed in U.S. Patent No. 3,716,482. The amount of phase separating organic material which is employed can vary and can range from 10 to 60 percent, based on the weight of the organic material and monomer employed in the initial suspension mixture.

Preferably, and in one aspect of this invention, the suspension is subjected to polymerization conditions at least to the point at which phase separation of the organic phase separating material and copolymer occurs. However, in this aspect it is preferred that polymerization not progress to the point at which substantially total polymerization of monomer occurs. Polymerization conditions usually require agitation of the suspension at a rate which can vary depending upon factors such as the size of the reaction vessel while heating the mixture at a suitable temperature, preferably at 75° to 85°C.

The suspension is contacted with a monomer feed comprising at least one ethylenically unsaturated monomer (and preferably a crosslinking monomer) under conditions such that the free radicals contained in the free radical matrix catalyze the polymerization of said monomer feed. The monomer feed is preferably continuously added to the suspension. Generally, the·amount of monomer which is employed in the monomer feed can vary but is less than 50 percent, based on the weight of the total amount of monomer which is employed. The monomer feed is added over a period of time which

-8-

can vary, but is preferably from 1 to 4 hours.

The polymerization conditions are continued until polymerization of monomer is essentially complete. The reaction can be finished by raising the temperature of the reaction mixture. The copolymer beads are subjected to conditions such that the organic phase separating material is removed from the beads. This can be accomplished using a process such as distillation. The copolymer beads can be separated using conventional techniques.

The size of the copolymer particles or beads of this invention can vary and is advantageously in the range from 50 to 2000 microns ($\mu$m), preferably from 200 to 1200 $\mu$m. Control of the size of the beads is achieved primarily by controlling the agitation rate, suspending agent, and the amount of monomers employed in the monomer feed.

The copolymer particles or beads are converted to anion or cation exchange beads using techniques well-known in the art for converting crosslinked addition polymers of a mono- and polyethylenically unsaturated monomer to such resins. In the preparation of weak base and chelating resins from poly(vinylaromatic) copolymer beads such as crosslinked polystyrene beads, the beads are advantageously haloalkylated, preferably halomethylated, most preferably chloromethylated, and the ion active exchange groups subsequently attached to the haloalkylated copolymer. Methods for haloalkylating the crosslinked addition copolymers and the haloalkylating agents included in such methods are also well-known in the art. Reference is made thereto for the purposes of this invention. Illustrative of such are U.S. Patent Nos. 2,642,417; 2,960,480; 2,597,492; 2,597,493; 3,311,602 and 2,616,817 and Ion Exchange by F. Helfferich, published in 1962 by McGraw-Hill Book Company, N.Y. Typically, the haloalkylation reaction consists of swelling the crosslinked addition copolymer with a haloalkylating agent, preferably bromomethylmethyl ether, chloromethylmethyl ether or a mixture of formaldehyde and hydrochloric acid, most preferably chloromethylmethyl ether and then reacting the copolymer and haloalkylating agent in the presence of a Friedel-Crafts catalyst such as zinc chloride, iron chloride or aluminum chloride.

Generally, ion exchange beads are prepared from the haloalkylated bead by contacting said bead with a compound capable of replacing the halogen of the haloalkyl group and which, upon reaction, forms an active ion exchange group. Such compounds and methods for preparing ion exchange resins therefrom, i.e., weak base resins and strong base resins, are well known in the art and U.S. Patent Nos. 2,632,000; 2,616,877; 2,642,417; 2,632,001; 2,992,544 and F. Helfferich supra are illustrative thereof. Typically, a weak base resin is prepared by contacting the haloalkylated copolymer with ammonia, a primary amine or a secondary amine, or polyamines such as ethylene diamine, propylene diamine, or the like. Representative primary and secondary amines include the methyl amine, ethyl amine, butyl amine, cyclohexyl amine, dimethyl amine, diethyl amine and the like. Strong base ion exchange resins are prepared using tertiary amines such as trimethyl amine, triethyl amine, tributyl amine, dimethylisopropanol amine, ethylmethylpropyl amine or the like as aminating agents.

Amination generally comprises heating a mixture of the haloalkylated copolymer beads and at least a stoichiometric amount of the aminating agent, (i.e., ammonia or the amine) to a temperature sufficient to displace the halogen atom attached to the carbon atom in α position to the aromatic nucleus of the polymer with aminating agent. A swelling agent such as water, ethanol, methanol, methylene chloride, ethylene dichloride, dimethoxymethylene, or combinations thereof is optionally, but advantageously employed. Conventionally, amination is carried out at conditions such that anion exchange sites are uniformly dispersed throughout the entire bead. Such complete amination is generally obtained within 2 to 24 hours at reaction temperatures between 25°C and 150°C.

Methods for converting copolymer beads other than poly(vinylaromatic) beads to anion exchange resins are illustrated in Helfferich, supra, pp. 48-58. In addition, methods for attaching other types of anion exchange groups, such as phosphonium groups, to copolymer beads are described therein.

Generally, chelate resin beads are prepared from the haloalkylated polymer by attaching thereto the chelate active groups, e.g. carboxyl groups. Illustrative of the well-known methods for preparing chelate resins is U.S. Patent No. 2,888,441 wherein the haloalkylated polymer is aminated by techniques hereinbefore described and the aminated copolymer subsequently reacted with suitable carboxyl containing compound such as chloroacetic acid. Alternatively, the haloalkylated polymer can be directly reacted with (1) a suitable amino acid, such as diamino acetic acid or glycine, or (2) an amino pyridine such as 2-picolylamine and N-methyl- -2-picolylamine to form a chelate resin.

Cation exchange resin beads can be prepared using techniques well known in the art for converting the crosslinked addition copolymer of mono- and polyethylenically unsaturated monomers to a cation exchange resin. Illustrative of such methods of preparing cation exchange resin are U.S. Patent Nos. 3,266,007; 2,500,149; 2,631,127; 2,664,801; 2,764,564 and F. Helfferich, supra. In general, the cation exchange resins useful herein are strong acid resins which are prepared by sulfonating the copolymer beads. While the sulfonation may be conducted neat, generally, the bead is swollen using a suitable swelling agent and the swollen bead reacted with the sulfonating agent such as sulfuric or chlorosulfonic acid or sulfur trioxide. Preferably, an excess amount of the sulfonating agent, for example, from 2 to 7 times the weight of the copolymer bead, is employed. The sulfonation is conducted at a temperature from 0°C to 150°C.

Because of the improved mechanical strength of the resins of this invention, they can be employed under harsher conditions than are previously known macroporous resins. For example, the macroporous ion exchange resins of this invention can be advantageously employed in those condensate polishing operations which now employ conventional macroporous resins, or in mining operations, wherein resins having the capability of high capacity with good mechanical and osmotic properties are needed, as well as in other uses for which conventional macroporous ion exchange resins are now employed.

The following examples are intended to illustrate the invention and are not intended to limit the scope thereof in any way. All parts and percentages are by weight based on the weight of the organic and water phases unless otherwise noted.

Example I

Into a one-gallon (0.004m³), jacketed, stainless steel reactor was charged an aqueous phase comprising 1478 g deionized water, 6.36 g of 48.8 percent active carboxymethylmethylcellulose in 1478 g water, and 1.92 g hydrated sodium dichromate; and an organic phase comprising 518 g styrene, 88 g of commerically available 55 percent active divinylbenzene, 458 g iso-octane, 2.27 g of 50 percent active t-butylperoctoate, and 1.52 g t-butylperbenzoate. The mixture was agitated at 200 rpm for 30 minutes. The mixture was heated to 80°C for 3.5 hours while agitation was continued. The mixture was maintained at 80°C, with agitation while 129 g styrene and 1.54 g of 55 percent divinylbenzene was continuously added over a 2 hour period. The mixture was maintained at 80°C and agitation for an additional 2.5 hours after continuous addition of the sytrene/-divinylbenzene mixture was complete. The mixture was then heated to 110°C with agitation for 5 hours. After this polymerization process was complete, the iso-octane diluent was removed by steam distillation. The resulting copolymer beads were air-dried. The product was designated as Sample No. 1.  For comparison purposes, macroporous copolymer beads were prepared using essentially equal amounts of reactant but employing a conventional batch polymerization process.  The product was designated as Sample No. C-1.

The products were converted to weak base anion exchange resins by haloalkylating the copolymer beads and reacting the haloalkylated copolymer bead with dimethylamine and isolating the product.  Except as otherwise noted, all samples were prepared under substantially similar conditions.  The amount of ion exchange functionalities and water retention capacities of the samples are comparable to that of commercially available resins.

Each of the samples was pumped in a water slurry through a centrifugal pump.  Attrition of the samples was determined according to the percentage of weak base resin beads unbroken after samples were pumped in a water slurry.  Results are presented in Table I.

TABLE I

| Sample[1] No. | Percent Unbroken Spheres | |
| --- | --- | --- |
| | Before Attrition | After Attrition |
| 1 | 100 | 97 |
| C-1* | 98 | 89 |
| 2 | 100 | 88 |
| C-2* | 90 | 29 |

*Not an example of the invention.

[1]Sample No. 2 is a product prepared using the process described for preparing Sample No. 1, but using 52 percent iso-octane based on the weight of the organic phase rather than the 43 percent iso-octane which was employed in the preparation of Sample No. 1. Sample Nos. C-1 and C-2 were functionalized macroporous copolymer products prepared using a conventional batch polymerization process but using essentially equal amounts of reactants as were employed in preparing Sample Nos. 1 and 2, respectively.

The data in Table I indicate that Sample Nos. 1 and 2 which were prepared using the process of this invention exhibit increased physical strengths over those samples which were prepared using a conventional batch process. In addition, it is indicated that an increase in pore size (as indicated by the increased use of iso-octane and as illustrated between Sample Nos. C-1 and C-2) provides a significant loss in physical properties, whereas samples prepared according to the process of this invention (as illustrated by Sample Nos. 1 and 2) provide a minimal loss in physical properties with increasing pore size.

32,473-F

## CLAIMS

1. A process for manufacturing improved crosslinked copolymer particles capable of being converted into ion exchange resins and having a macroreticular character, which process comprises:

    (a) forming an agitated aqueous suspension of (i.) a suspending agent in an amount sufficient to provide suspension of the particles;

    (ii.) a functionally effective amount of a polymerization initiator; and (iii.) a phase-separating amount of an organic material in which the monomer(s) to be fed is soluble but in which the resulting copolymer particles are essentially insoluble, and which is capable of causing phase separation of the resulting copolymer particles from the organic material in order to provide a copolymer particle having a macroreticular character;

(b)  feeding to said mixture under polymer-
     ization conditions polymerizable mono-
     mer(s) while balancing the suspension
     conditions, the feed rate of monomer(s),
     the agitation rate and the polymerization rate in order to provide copolymer particles having a macroreticular
     character, such that free radicals
     contained in the free-radical matrix
     catalyze the polymerization of said
     monomer feed; and

(c)  continuing polymerization conditions
     until the monomer(s) which is present is
     essentially converted to polymer.

2.   A process of Claim 1 wherein said suspension polymerizable monomer(s) is monoethyllenically
unsaturated monomer(s).

3.   A process of Claim 1 wherein the additional monomer(s) of step (b) is a mixture of at least
one monoethylenically unsaturated monomer and a crosslinking monomer.

4.   A process of Claim 1 wherein said polymerizable monomer(s) is initially suspended in the
suspension mixture in step (a) and additional monomer(s) is fed to the suspension mixture under polymerization conditions in step (b).

5.   A process of Claim 1 where in said polymerizable monomer(s) is initially suspended in the
suspension mixture in step (a), the suspension mixture
is then subjected to polymerization condition at least to the point at which phase separation of organic material and copolymer occurs but to the point at which substantially total polymerization of monomer(s) does not occur; and additional monomer(s) is fed to the suspension mixture under polymerization conditions in step (b).

6.    A process of Claim 4 or 5 wherein said suspension polymerizable monomer(s) is monoethylenically unsaturated monomer(s).

7.    A process of Claim 4 or Claim 5 wherein the additional monomer(s) of step (b) is a mixture of at least one monoethylenically unsaturated monomer and a crosslinking monomer.

8.    A product prepared using the process of Claim 1 comprising the polymerization product of a monovinylidene aromatic monomer and a polyvinylidene aromatic monomer.

9.    A product prepared using the process of Claim 4 or 5 comprising the polymerization product of a monovinylidene aromatic monomer and a polyvinylidene aromatic monomer.

10.    A product prepared using the process of Claim 1 comprising the polymerization product of styrene and divinylbenzene.

11.    A product prepared using the process of Claim 4 or 5 comprising the polymerization product of styrene and divinylbenzene.